# EUROPEAN PATENT SPECIFICATION

(11) **EP 2 106 893 B1**
(45) Date of publication and mention of the grant of the patent: **20.08.2014**
(21) Application number: 07851831.3
(22) Date of filing: 21.12.2007
(51) Int. Cl.: B29B 17/00

(54) **PLANT FOR REPROCESSING WASTE TIRES AND FOR MODIFYING RUBBER CRUMB**
ANLAGE ZUR AUFBEREITUNG VON ALTREIFEN UND ZUR MODIFIKATION VON KAUTSCHUKKRÜMELN
INSTALLATION DE RETRAITEMENT DES PNEUS USÉS ET DE MODIFICATION DE MIETTES DE CAOUTCHOUC

(30) Priority: 27.12.2006 LT 2006096
(43) Date of publication of application: 07.10.2009
(73) Proprietor: UAB Devulco, 07150 Vilnius (LT)
(72) Inventor: MIRMOV, Naum, IL-21059 Ma'alot (IL); VERNYI, Adolf, IL-56332 Yehud (IL); KHODOS, David, IL-24952 Maalot (IL); VASSILIEV, Aleksey, IL-44837 Maalot (IL)
(74) Representative: Kucinskas, Leonas Antanas
(86) International application number: PCT/LT2007/000009
(87) International publication number: WO 2008/078974

(56) References cited:
- EP-A1- 0 816 035
- GB-A- 1 513 695
- LT-B- 5 368
- LT-B- 5 422
- RU-C1- 2 111 859
- RU-C1- 2 138 393
- SU-A1- 1 675 109
- US-A- 5 264 640

## Description

### Technical Field

The invention relates to waste tire recycling. The offered plant can be used in industry of manufacturing technical rubber, building industry, manufacturing of household rubber products. This plant can be used independently, for reprocessing of waste tires and obtaining rubber crumb, synthetic materials and steel for metallurgical engineering and marketable modified rubber products.

### Background Art

Various technological schemes of plants for vehicles tire destruction and modification of rubber crumb are known. Generally, a method of tire cover destruction defines construction and technological scheme of a plant.

Also are known methods and plants of recycling waste tires by cryogenic freezing or by means of ozone-containing gas. They are stated in the special literature and in following patents:
US 5 385 307 U.S. CI. 241/41, 65, 270, 271; 241/DIG 31, 37;
US 5 492 657 U.S. Cl. 264/83, 37; DIG 69
US 6 655 167 U.S. CI. 62/320; 62/64; 241/23, 17, 62, 65;
EP 0816035 Int. CI. B29B 17/00; C08J 11/10;
EP 0482723 Int. CI. B29B 13/04; B29B 13/10; B29B 17/00; B29K 21/00; B29K 105/26;
EP 11352240 Int. CI. B23P 19/04;
WO 9707893 Int. CI. B02C 19/12;
RU 2060882 Int. CI.B029B 17/02;
RU 2111859 Int. Cl. B028B 17/00; C08J 11/10;
RU 2123425 Int. Cl. B029B 17/00; B02C 18/44; C08J 11/16;
RU 2144461 Int. CI. B029B 17/00;
RU 2191692 Int. CI. B029B 17/00; B02C 23/24; C08J 11/16; B29K 21/00;
LT 2005 084 Int. Cl. B29B 17/00, 02; C08J 11/10;
RU 2004128495 Int. CI. B29B 17/00; B29K 21/00;
US 6,601,788; US Cl. 241/24, 17,29; 241 DIG 31
US 5,264,640; US Cl. 585/241; 2012,5; 241 DIG 37

The companies: "OK Tech." Inc. (USA), "OK Tech Alliance" Ltd. (UK), "OK Rubber Co." (Thailand) and some other firms use plants for waste tires recycling by ozone-containing gas. Company "Intec" Ltd. (Germany) uses cryogenic freezing for tire destruction. These plants contain same machines and apparatuses. They include: units for preliminary crushing of whole tires in to separate pieces, chambers for processing of rubber pieces by ozone-containing gas or for freezing by cryogenic refrigerant, equipment for sorting separated rubber crumb from cord, machines for rubber crumb crushing. In some known technologies tire crushing and processing by ozone-containing gas is made in same apparatus that reduces number of the equipment and duration of waste tire recycling.

Described plants have following disadvantages:
- for tire crushing is used mechanical equipment and technology;
- great consumption of ozone or refrigerant;
- a good deal of steel wire and synthetic fibers remains in a rubber crumb;
- this plants contain expensive and not effective equipment for separation of a steal wire and synthetic fiber from rubber crumb.

Company "Ostorio" Ltd. (Lithuania) uses plant in which the waste tires are processed by ozone and cryogenic freezing. It is combined technology plants. Exceptional feature of this plant is that initially the whole tire is frozen and then is processed by ozone. On other technology a whole tire is processed by ozone for destruction of a rubber cover and then the rubber remains are frozen and separated from cord.

### Plant according to the patent application of US US 6,601,788:

The method provides for the soaking of a vehicle tire in a solvent, removal of the tire from the solvent, movement of the tire by a conveyor to an apparatus that applies physical pressure to the tire, while situated upon a circular screen which allows the physical pressure applied to fragment the tire into its component parts, pressing the rubber components through the screen with any remaining liquid and allowing the non rubber components to be removed for recycling purposes or to be discarded.

### Disadvantages of this method:

- Long lasting process of soak in solvent which takes 90-120 minutes;
- Large consumption of energy for heating a solvent.

The subject-matter of claim 1 differs from the disclosure of EP0816035 in that the second stage of technological process of recycling waste tire contains rubber intensive freezing apparatus and the machine for rubber separation from a steel wire and synthetic fibers connected to the equipment for sorting and transportations of a rubber crumb and cord, also the plant contains the device block for steel wire and synthetic fibers, e.g. tire cord crushing, which is connected to the sorting system of the second stage; also the plant contains block of machines and apparatus for rubber crumb modification which is connected to the sorting equipment of the first and second stages by pneumatic transporting system. EP0816035 only contains an unspecific disclosure that the tire cover destruction by ozone-containing gas can be followed by a cryogenic process.

Further, US 5264640 discloses a plant for recycling waste tires of vehicles and a rubber crumb modification includes the block of devices for tire rubber cover destruction, wherein the plant consists of two stage technological apparatuses for tire rubber cover destruction and separation of rubber from cord, also in the plant is several additional technological blocks in same technological scheme with the apparatuses for tire cover destruction, and the second stage of technological process of recycling waste tire contains apparatus for tire cover destruction by ozone-containing gas, and the first stage of technological process of recycling waste tire contains rubber intensive freezing apparatus and the machine for rubber separation from a steel wire and synthetic fibers connected to the equipment for sorting and transportations of a rubber crumb and cord; also the plant contains block of machines and apparatus for rubber crumb modification.

### Brief Description of Drawings

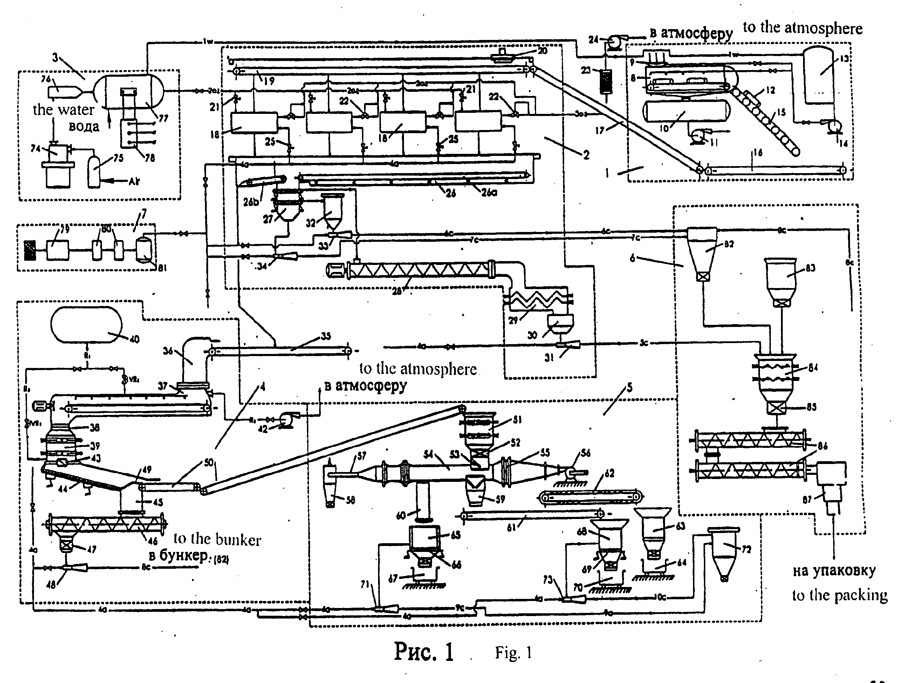

Fig.1. is a schematic representation of the offered plant.

### Detailed Description of the Invention

The plant shown in Fig. 1 includes several machine blocks and units in one technological scheme. The plant contains washing machine 1 and apparatus 2 for the first stage of technological process for destruction of tire cover by ozone-containing gas with sorting system and rubber crumb transportation. Block 3 is for ozone production from atmospheric air. For the second stage of recycling waste tire technological process there is block 4 containing devices for rubber intensive freezing and rubber separation from steel wire and synthetic fibers. The plant contains device block 5 for steel wire and synthetic fiber grinding and for modification of rubber crumb there is device block 6. For compressed air generation there is compressor station 7.

The washing machine 1 consists of the washing chamber 8 with receiving bunker 9. For dirty water collecting to the washing chamber there is connected tank 10. Dirty water is drained from the tank 10 by the dredge pump 11. The chamber 8 for tires 12 washing and the bunker 9 is connected to warm water tank 13 by means of pipeline 1w. The pump 14 feeds warm water from a tank 13 to chamber 8 and bunker 9. Clean tires 12 from the chamber 8 moves on roller conveyer 15 to the separating conveyor 16. The tires from washing machine 1 are fed into apparatus 2 by conveyor 17.

The apparatus 2 of the first stage of tire rubber cover destruction contains working chambers 18 and in front side of it is fixed rails 19 with carriage 20. Tires 12 are placed on carriage 20 before feeding it into working chamber 18. The apparatus 2 is connected to ozone generator 77 by means of pipeline 2oz for feeding ozone-containing gas to the working chambers 18. Each chamber 18 is connected to the pipeline 2oz by means of the valve 21. Used gas from the chamber 18 flows out through valve 22 and pipeline 3oz connected to ozone destructor 23 and exhaust fan 24. Each chamber 18 is connected by means of valve 25 with a compressed air pipeline 4a. Two section conveyor 26 consists of sections 26a and 26b and is placed under chambers 18. Section 26b is a vibration conveyor. Section 26b is for destroyed tire transferring and collecting onto the transferring conveyor. The said section is inclined. Combined type sorter 27 consists of three cells and is placed in clearance between sections 26a and 26b. Large pieces of a tire protector rubber from first cell is directed into a grinder 29 and a bunker 30 by means of screw conveyor 28. The bunker 30 is connected to plant 6 for rubber crumb modification by means of pneumatic transporting pipeline 5c with jet ejector 31. The second cell for sorting 27 is connected to the collector 32 with jet ejector 33. The jet ejector 33 is on pneumatic transporting pipeline 6c connected to plant 6. The third cell for sorting 27 is connected to jet ejector 34 and pneumatic transporting pipeline 7c connected to plant 6. The jet ejectors 31, 33 and 34 are intended for pneumatic transport of a rubber crumb. Therefore the nozzles of the ejectors are connected to compressed air pipeline 4a. The air is compressed by compressor station 7.

Conveyor 26 section 26b is linked to the conveyor 35 for rubber and cord remains feeding into block 4, the second recycling waste tire stage of technological process. The conveyor 35 is connected to the loading bunker 36 which is attached to the chamber 37 for intensive rubber freezing. The chamber 37 through tambour 38 is connected to machine 39 for separation of rubber from steel wire and synthetic fibers. In order to get low temperature in the machine 39 and chamber 37 it is connected by means of a pipeline R₁ to the receiver 40 with liquid refrigerant for example nitrogen. For the intensive circulation of refrigerant vapor in the apparatus 37 there is inserted fan 41. Refrigerant vapor from the chamber 37 is sucked off by fan 42 by means of pipeline R₂. Regulating valves VR₁ and VR₂ are placed on the pipeline R₁ for regulate feeding of refrigerant to the chamber 37 and machine 39. The machine 39 has the hatch 43 connected with the riddle 44. To the riddle 44 is attached the bunker 45 with next to it screw conveyor 46 with feeder 47. To the feeder 47 is attached jet ejector 48 with pneumatic transporting pipeline 8c connected to plant 6 for a rubber crumb modification. The device 49 for feeding cord fiber to the conveyor 50 is connects to the outlet part of the riddle 44. The conveyor 50 is connecting riddle 44 and machine 51 for grinding of a steel wire and synthetic fibers.

The machine 51 includes block 5. Block 5 also includes the equipment for steel wire and synthetic fibers grinding and sorting. The machine 51 has a feeder 52 connected with pneumatic separator 54 through the receiver 53. The separator 54 has a jalousie type grind 55 for regulating air speed in separator 54, fan 56 and pipeline 57 connected to cyclone 58. The separator 54 has the receiver 59 for steel wire pieces and the receiver 60 for synthetic fiber. The conveyor 61 with the magnetic separator 62 is placed under the receiver 59. This separator removes steel wire pieces from the conveyor 61 and feeds it into the bunker 63. The collecting bin 64 is placed under the bunker 63. The receiver 60 of the separator 54 is joined with the bunker 65 with the vibrating screen bottom 66. The collecting bin 67 is placed under the bunker 65. Into device block 5 is fitted the bunker 68 fixed next to the outlet side of the conveyor 61. The bunker 68 has vibrating screen bottom 69 with storage bin 70 underneath. Jet ejector 71 is connected to the bunker 65 and by means of the pneumatic transporting pipeline 9c to the bunker 72 for collection of synthetic fibers. The bunker 68 is connected to the bunker 72 for synthetic fiber collecting by means of pneumatic transporting pipeline 10c and jet ejector 73.

Offered plant for tire recycling contains block 3 with devices for production of working gas containing ozone. The ozone is produced for example from atmosphere air. Compressor 74 sucks the air through the drier 75 and compresses into oxygen concentrator 76. The concentrator 76 is connected to ozone generator 77 which by means of the pipeline 2oz is connected to the first stage processing apparatus 2. Electric power unit 78 provides high voltage for ozone generator.

The compressor station 7 includes two or more compressors 79 connected with oil and moisture separators 80 compressed air receiver 81 connected to the pipeline 4a.

The rubber crumb after the first and the second stage of waste tire processing is fed into plant 6 for rubber modification. The plant for a rubber crumb modification 6 includes dosing bunker 82 with pneumatic transporting pipelines 6c, 7c, 8c. Also dosing bunker 83 for modifier storage and feeding. The bunker 82 and 83 is connected to the mixer 84. The pneumatic transporting pipeline 5c is connected to the mixer 84. The mixer 84 has a dosing device 85 and is connected to a two-stage reactor 86, for example, a screw type. The reactor 86 is connected with extruder 87. Modified rubber from extruder 87 is fed into packing.

### Description of Embodiment

The offered plant for waste tire recycling and modification of rubber crumb operates in following way. Tires 12 from storage are fed into washing machine bunker 9. In winter time warm water is fed into the bunker 9 for defrosting ice or a snow. The warm water is fed from tank 13 by pump 14 through the pipeline 1w. Tires 12 from the bunker 9 are fed into washing machine 8. The warm water for tires washing is fed from tank 13 by pump 14. Used water from the washing machine 8 is drained into the dirty water tank 10 and by the dirt pump 11 is fed for clearing. Clean tires 12 from the washing machine 8 are rolled by roller conveyor 15 to the separating conveyor 16 and are fed farther on the conveyor 17 to the block 2, the first stage of technological process. Tires 12 lay down periodically into the carriage 20 which moves by adjusted operating mode on rails 19 for feeding it into apparatus 2 working chambers 18. When the tire is loaded in the chamber 18 and it is hermetically closed the valve 21 for working gas feeds into the chamber 18 also the valve 22 for used gas suction opens. Exhaust fan 24 and ozone destructor 23 also are turned on. The duration of tire processing by ozone is from 3 to 6 minutes, afterwards ozone feeding valve 21 closes and the valve 25 opens for blowing the chamber 18 cavity by compressed air. During a blow process the valve 22 is opened, ozone destructor 23 and exhaust fan 24 constantly operating. After the blow, valve 25 closes and the processed tires are unloaded. During processing of tire rubber cover by ozone some of the protector parts and other parts of the tire "cut" in pieces and various sizes rubber crumb. The amount of formed rubber crumb is up to 50% of tire rubber weight. A rubber crumb and a cord of a tire with remains of a rubber unload from the chamber 18 on section 26a of the conveyor 26. A rubber crumb from section 26a moves to the sorting 27, cord with a rubber remains dump on section 26b further on the conveyor 35 moves to the second stage freezing chamber 37 for intensive freezing. The processing in apparatus 2 is carried out, that the camber 18 is in working position in some period of time.

A cord with a rubber remains by the conveyor 35 through intermediate tambour 36 is fed into the freezing chamber 37. Intensive freezing realizes by means of liquid refrigerant (liquid nitrogen or liquid carbon dioxide) fed from the receiver 40 into the cavity of the apparatus 37 by means of pipeline R₁ through regulating valves VR₁ and VR₂. A circulating fan 41 and an exhaust fan 42 is for freezing process intensification. Afterwards the exhaust fan 42 sucks off the refrigerant vapors by means of pipeline R₂ and ejects it into the atmosphere. A rubber with cord freezes up to embrittling temperature (from minus 66°C to 70°C) and feeds it into the machine 39 through tambour 38. In the machine 39 a rubber separates from cord steel wire and synthetic fibers. Then the hatch 43 opens and a rubber crumb and cord dumps onto the riddle 44. The rubber crumb from the riddle throws into the bunker 45 and feeds by the screw conveyor 46 to the feeder 47. A rubber crumb by jet ejector 48 pneumatic transporting pipeline 8c from the feeder 47 feeds to the modification block 6 bunker 79. A cord (steel wire and synthetic fibers) by means of the device 49 throws on the conveyor 50 and are directs to the machine 51 for a wire and fibers crushing. A wire and fibers cuts into from 10 to 20 mm size pieces. Crushed cord feds into the receiver 53 through the feeder 52 and then evenly feds to the pneumatic separator 54. The fan 56 blows in the separator 54 through jalousie type grind 55. Steel wire, synthetic fibers and rubber crumb have a different density. Therefore, more light synthetic fibers and rubber crumb fly off by air flow into the receiver 60, and a steel wire gets into the receiver 59. Steel wire pieces and some of rubber crumb and synthetic fiber sucks out from the receiver 59 on the conveyor 61 which is with magnetic separator 62. A steel wire takes off from conveyor 61 by means of magnetic separator 62 and feeds into the bunker 63, and in the collector 64. The remains of a steel wire, synthetic fiber and rubber crumb feeds from the conveyor 61 in the bunker 68. Heavier particles separates by means of the vibrating screen bottom 69 and feeds in the collector 70 and light synthetic fibers sucks off into the bunker 72 by pipeline 10c with jet ejector 73. Moreover, synthetic fibers are thrown from the receiver 60 into the bunker 65. A rubber pieces separates by means of the vibrating screen bottom 66 and feeds in the collector 67, and synthetic fibers sucks off into the bunker 72 by pipeline 9c with ejector 71.

A rubber crumb after the first and second stages of technological process collects into the bunker 82 of the modification block 6. From the bunker 82 and bunker 30 a rubber crumb directs into mixer 84. Modifier from the bunker 83 also feeds to the mixer 84. Thoroughly intermixed and heated (the heating system of modification plant is not shown on the scheme) mixture of a rubber crumb and modifier through dosing device 85 passes in the modifying machine 86. Modified material is directed into the extruder 87 from the machine in mode of plate or wisp directs into packing. Obtained material corresponds to rubber properties and can be used in industry for producing rubber products.

### The basic advantages of offered apparatus

The advantage of the offered plant enables to obtain the purposes of the invention: expansion of a rubber crumb quality and quantity of clean crumb after processing, decrease of a power consumption and simplification of the technological process.

The plant has the following advantages:
1. The tire rubber cover processing in plant is done by two stage technological process: destruction of a tire rubber cover by ozone-containing gas and freezing rubber remains up to embrittling temperature with full separation of a rubber from a steel wire and synthetic fibers;
2. The plant consumes from 2.5 to 2.8 times less of cryogenic refrigerant, than recycling waste tires only by refrigerant for example liquid nitrogen;
3. Waste tires two stage recycling technology reduces power consumption in comparison to plants of mechanical or cryogenic destruction from 2.4 to 2.7 times;
4. A rubber crumb after tire destruction and a cord separation do not contain a steel wire and synthetic fibers.
5. Rubber crumb modification process without impure is from 1.5 to 1.7 times cheaper and produced rubber is suitable for industrial use.

## Claims

1. The plant for recycling waste tires of vehicles and a rubber crumb modification includes the block of devices for tire rubber cover destruction wherein the products are exposed to the action of mechanical loads and gas mixture containing ozone, **characterized in that** the plant consists of two stage technological apparatuses for tire rubber cover destruction and separation of rubber from cord (2), also in the plant is several additional technological blocks in same technological scheme with the apparatuses for tire cover destruction and the first stage of technological process of recycling waste tire contains apparatus for tire cover destruction by ozone-containing gas (3), the device for tire feed into apparatus and the system for a rubber crumb sorting, and the second stage of technological process of recycling waste tire contains rubber intensive freezing apparatus (4) and the machine for rubber separation from a steel wire and synthetic fibers connected to the equipment for sorting and transportations of a rubber crumb and cord, also the plant contains the device block for steel wire and synthetic fibers, i.e tire cord, crushing (5), which is connected to the sorting system of the second stage; also the plant contains block of machines and apparatus for rubber crumb modification (6) which is connected to the sorting equipment of the first and second stages by pneumatic transporting system (27).

2. The plant according to claim 1, **characterized in that** rubber crumb sorting of first stage of waste tire recycling contains combined type sorting placed after the vibration conveyor (27).

3. The plant according to claim 1, **characterized in that** first stage recycling of waste tire contains three rubber crumb (27) transportation systems which are connected to the combined type of sorting.

4. The plant according to claim 3, **characterized in that** two systems of rubber crumb transportation comprises of pneumatic transporting pipelines (5c) with jet ejector (48) connected to the bunker of the modification plant.

5. The plant according to claim 3, **characterized in that** first stage waste tire recycling system of rubber crumb transportation contains the screw conveyor (28) connected to the sorter and grinder (29).

6. The plant according to claim 1, **characterized in that** vibration conveyor (26a) of the first stage of waste tire recycling is joined with the conveyor for cord with a rubber remains feeding to the second stage of waste tire recycling.

7. The plant according to claim 1, **characterized in that** the rubber intensive freezing apparatus (37) contains two through tambours placed on the input and output of the apparatus.

8. The plant according to claim 7, **characterized in that** the tambour (38) placed on output of rubber intensive freezing apparatus is connected to machine for separation of rubber from a cord (39).

9. The plant according to claim 8, **characterized in that** the machine for separation of rubber from cord (39) and outlet tambour of intensive freezing of rubber with cord are connected to a refrigerant receiver (40).

10. The plant according to claim 1, **characterized in that** the machine for crushing a steel wire and synthetic fibers (51) is placed at the pneumatic type separator (54).

11. The plant according to claim 10, **characterized in that** the pneumatic separator (54) is supplied with collector for a steel wire and synthetic fibers (70), and also a cyclone (58) for dust and small particle.

## Patentansprüche

1. Anlage für Verarbeitung von abgenutzten Reifen und Gummimodifizierung, die aus einem Block von Mechanismen für Zerlegung von der Gummibekleidung besteht und die sich dadurch **unterscheidet,** dass die Anlage zwei Stufen von technologischen Geräten hat, die für Zerlegung der Gummibekleidung von Reifen und Abtrennung des Kords vom Gummi bestimmt sind; dazu beinhaltet die Anlage einige technologische Blocks von Hilfsgeräten, die zu einem einheitlichen technologischen Schema mit dem Gerät, das für Zerlegung der Reifenbekleidung bestimmt ist, verbunden sind, und die erste Stufe hat ein Gerät für Zerlegung der Gummibekleidung mit Hilfe vom ozonhaltigen Gas und ein Apparat für Reifenbeladung in die Anlage und Sortiersystem von Gummischnitzeln; die zweite Stufe hat ein intensivbetätigtes Gummi-Gefriergerät und eine Maschine für Abtrennung des Gummis vom Stahldraht und Kunststofffaden, ein mit ihnen verbundenes System für Sortierung und Förderung von Schnitzeln und Kord, außerdem hat die Anlage ein Geräteblock für Zerkleinerung vom Stahldraht und Kunststofffaden (Reifenkord), das mit Sortiersystem der zweiten Bearbeitungsstufe verbunden ist; die Anlage beinhaltet auch Maschinen- und Geräteblock für Modifizierung von Gummischnitzeln, das durch druckluftförderer-artige Rohrleitung an Sortiersystem der ersten und zweiten Bearbeitungsstufe angeschlossen ist.

2. Anlage laut Punkt 1, die sich dadurch **unterscheidet,** dass Sortiersystem der ersten Bearbeitungsstufe ein kombiniertes Sortiergerät, das auf einem Schwingungsförderer befestigt ist, beinhaltet.

3. Anlage laut Punkt 1, die sich dadurch **unterscheidet,** dass die erste Bearbeitungsstufe drei Förderungssysteme für Gummischnitzel hat, die am kombinierten Sortiergerät angeschlossen sind.

4. Anlage laut Punkt 3, die sich dadurch **unterscheidet,** dass zwei Förderungssysteme für Gummischnitzel, die aus Druckluftrohrleitung und Strahlsauger besteht, am Behälter der Modifizierungsanlage angeschlossen sind.

5. Anlage laut Punkt 3, die sich dadurch **unterscheidet,** dass Förderungssystem für Gummischnitzel der ersten Stufe einen Schraubenförderer hat, der mit dem Sortiergerät und dem Zerkleinerer verbunden ist.

6. Anlage laut Punkt 1, die sich dadurch **unterscheidet,** dass der Abschnitt vom Schwingungsförderer der ersten Stufe mit dem Förderer der Kord- und Gummireste in die zweite Stufe verbunden ist.

7. Anlage laut Punkt 1, die sich dadurch **unterscheidet,** dass intensivbetätigtes Gummi-Gefriergerät zwei Übergangsschleusen hat, die sich auf dem Eingang bzw. Ausgang des Gefriergeräts befinden.

8. Anlage laut Punkt 7, die sich dadurch **unterscheidet,** dass die Schleuse am Ausgangsende des Gefriergeräts mit der Maschine für Abtrennung des Gummis vom Kord verbunden ist.

9. Anlage laut Punkt 8, die sich dadurch **unterscheidet,** dass die Maschine für Abtrennung des Gummis vom Kord und mit ihr verbundene Schleuse, die für Ableitung vom gefrorenen Gummi mit Kord bestimmt ist, am Tank vom Kältemittel angeschlossen sind.

10. Anlage laut Punkt 1, die sich dadurch **unterscheidet,** dass die Maschine für Zerkleinerung von Stahldraht und Kunststofffaden auf einem druckluftbetätigten Abscheider gesetzt ist.

11. Anlage laut Punkt 10, die sich dadurch **unterscheidet,** dass druckluftbetätigter Abscheider einen Speicher für Stahldraht und Kunststofffaden und einen Zyklon, der für Staub- und Partikelsammlung bestimmt ist, hat.

## Revendications

1. Équipement de traitement des pneus usagés et de modification des miettes de caoutchouc comprenant le bloc des mécanismes de destruction du revêtement du caoutchouc , se différencie par le fait que l'équipement possède deux niveaux d'équipements technologiques destinés à la destruction du revêtement en caoutchouc du pneu et la séparation de la corde du caoutchouc ; par ailleurs, l'équipement a plusieurs blocs technologiques de mécanismes de secours, connectés à un schéma technologique unifié avec l'équipement destiné à la destruction du revêtement des pneus, tandis que le premier niveau de traitement a un équipement pour la destruction du revêtement des pneus avec du gaz contenant de l'ozone, avec un appareil pour le chargement des pneus dans l'équipement et le système de triage des miettes de caoutchouc, et le second système de traitement possède un équipement de réfrigération intense du caoutchouc, une machine de séparation du caoutchouc du fil de fer et des fils synthétiques et un système de triage et de transport des miettes et de la corde connecté à ceux-ci ; par ailleurs, l'équipement possède un bloc de mécanismes pour le broyage du fil de fer et des fils synthétiques (corde de pneu), qui est raccordé au système de triage du traitement du second niveau, de même l'équipement a un bloc de machines et d'équipements pour la modification des miettes de caoutchouc qui est connecté par un tuyau de transport pneumatique au système de triage du premier et second niveau.

2. L'équipement est analogue au point 1, mais il se différencie par le fait que le système de triage du premier niveau de traitement comprend une trieuse de type combiné, mise après le transporteur vibrant.

3. L'équipement est analogue au point 1, mais il se différencie par le fait que le premier niveau de traitement a trois systèmes de transport des miettes de caoutchouc, raccordés à la trieuse de type combiné.

4. L'équipement est analogue au point 3, mais il se différencie par le fait que les deux systèmes de transport des miettes de caoutchouc, comprenant un tuyau pneumatique et un éjecteur à jet, sont raccordés au silo de l'équipement de modification.

5. L'équipement est analogue au point 3, mais il se différencie par le fait que le système de transport des miettes de caoutchouc du premier niveau de traitement a un transporteur à spirale, raccordé à la trieuse et au broyeur.

6. L'équipement est analogue au point 1, mais il se différencie par le fait que la section du transporteur vibrant du premier niveau de traitement est reliée au transporteur d'envoi de la corde avec les restes de caoutchouc sur le deuxième système de traitement.

7. L'équipement est analogue au point 1, mais il se différencie par le fait que l'équipement de réfrigération intense du caoutchouc a deux tambours transitoires, posés à l'entrée et la sortie de l'appareil de réfrigération.

8. L'équipement est analogue au point 7, mais il se différencie par le fait que le tambour à l'extrémité de la sortie de l'appareil de réfrigération est relié à la machine de séparation du caoutchouc de la corde.

9. L'équipement est analogue au point 8, mais il se différencie par le fait que la machine de séparation du caoutchouc de la corde et le tambour, relié à celle-ci et destiné à sortir le caoutchouc réfrigéré avec la corde, sont raccordés au réservoir de l'agent de réfrigération.

10. L'équipement est analogue au point 1, mais il se différencie par le fait que la machine de broyage du fil de fer et des fils synthétiques est posée sur un séparateur de type pneumatique.

11. L'équipement est analogue au point 10, mais il se différencie par le fait que le séparateur pneumatique a un dispositif d'emmagasinage pour le fil de fer et les fils synthétiques, ainsi qu'un cyclone pour collecter les poussières et les petits morceaux.
